# EUROPEAN PATENT SPECIFICATION

(11) **EP 2 327 205 B1**
(45) Date of publication and mention of the grant of the patent: **25.07.2018**
(21) Application number: 09786955.6
(22) Date of filing: 17.08.2009
(51) Int. Cl.: H04N 5/44, H04N 5/50, H04N 7/16, H04N 7/24, H04N 7/52

(54) **DYNAMIC SWITCHING BETWEEN DIGITAL TV SERVICES**
DYNAMISCHE UMSCHALTUNG ZWISCHEN DIGITALEN TV-DIENSTEN
COMMUTATION DYNAMIQUE ENTRE DES SERVICES DE TÉLÉVISION NUMÉRIQUE

(30) Priority: 22.08.2008 EP 08162860
(43) Date of publication of application: 01.06.2011
(73) Proprietor: TP Vision Holding B.V., 1097 JB Amsterdam (NL)
(72) Inventor: VLOT, Marnix, C., 5656 AE Eindhoven (NL)
(74) Representative: DREISS Patentanwälte PartG mbB
(86) International application number: PCT/IB2009/053618
(87) International publication number: WO 2010/020934

(56) References cited:
- WO-A1-00/40012
- WO-A1-99/55090
- US-B1- 6 993 782
- "Digital Video Broadcasting (DVB) - Guidelines on implementation and usage of Service Information (SI)" ETSI STANDARDS, LIS, SOPHIA ANTIPOLIS CEDEX, FRANCE, no. v1.6.1, 1 January 2004 (2004-01-01), pages 1-55, XP002399713 ISSN: 0000-0001

## Description

### FIELD OF THE INVENTION

The present invention relates to the field of Digital TV (DTV) such as in Digital Video Broadcasting (DVB) and Internet Protocol (IP) TV, mores specifically to switching between Digital TV services. The invention provides a method of creating variants of a Digital TV service, a Digital TV transmitter, a Digital TV receiver, a Digital TV system, and a Digital TV signal.

### BACKGROUND OF THE INVENTION

Different TV services (or channels), e.g. temporary different variant versions linked to a mother service, offered to different viewers of the mother service is known. As an example, in the form of a time slot where different local news transmissions are transmitted to different parts of a country. In analog TV systems this is handled by transmitting these different local news transmissions by separate transmitters, since all TV transmissions are transmitted to the viewers by separate local transmitters, either by means of cable or wirelessly.

In Digital TV a digital data-stream representing video and audio content is transmitted modulated on a carrier frequency. It is a recent trend within broadcasting of Digital TV signals to broadcast only one common Digital TV signal to all viewers in the whole country. This means that a very large channel capacity is required to continuously reserve channel capacity to transmit one service including one mother service and e.g. 5 different variant services, in spite the fact that such variant services may actually represent exactly the same content except for e.g. 20 minutes of 5 versions of local news two times a day. Even larger capacity will be required in the near future when many services are offered in High Definition (HD) TV quality as a variant service to Standard Definition (SD) quality TV.

In order effectively handle such transmission of a mother service and associated variant services, it is possible to pack all services into the Digital TV signal, e.g. using different carrier frequencies and/or using different multiplexing techniques. Digital Video Broadcasting (DVB) defines various means to create some flexibility, e.g. to change location of a content data-stream within a multiplex, or by linking the service to another multiplex on another carrier frequency (see EN300468). Hereby it is possible to save channel capacity since the content of the variant services is only transmitted at times when it differs from the content of the mother channel. Some mechanisms have been identified, see IEC62216, which use existing DVB signals (EN300468) or have been recently identified in DVB, see DVB/GBS0600. Hereby a viewer's Digital TV receiver is required to switch between a mother service which may be transmitted at one channel and the associated variant service at another channel when required, e.g. to select which one of several variant services to choose, according to preset access rights, viewer preferences or a zip code of the viewer to allow selection of the variant service with the matching local news.

However, the mentioned service switching mechanisms suffer from a number of shortcomings in the forth and back switching between services, and the proposed methods are rather complex leading to complex and non-consistent receiver implementations.

WO 99/55090 A1 discloses a digital television system which receives control data from a source and uses the control data to switch channels on a digital television. The digital television system includes a memory which stores computer executable process steps and channel switching circuitry which is capable of receiving television signals transmitted over a plurality of different channels. At least one of the television signals is received over a first channel and includes control data relating to a second channel. A controller is also included in the digital television system, which receives the control data and which executes the process steps stored in the memory so as to control the channel switching circuitry in accordance with the control data to switch from the first channel to the second channel.

WO 00/40012 A1 discloses an apparatus for receiving programs from a plurality of channels, comprising a tuner for tuning to any of the plurality of channels, and an electronic program guide for presenting a schedule of the programs. The apparatus comprises virtual channel means for creating a user selectable virtual channel for reproducing selected programs from various genuine channels. The virtual channel means are adapted to control the tuner to tune to a channel currently broadcasting a selected program. When a user selects the virtual channel, the apparatus takes care of automatically switching between the genuine channels broadcasting the programs viewed on the virtual channel. As a consequence, the user can view the desired programs by simply selecting the virtual channel.

### BRIEF DESCRIPTION OF THE INVENTION

Following the above explanation, it may be seen as an object of the present invention to provide a method allowing a simple automatic switching between a mother service and a variant service in a Digital TV system. Still, the method must be backwards compatible with existing standards and equipment.

According to a first aspect, the invention provides a method for creating variants of a mother service in a Digital TV system by switching between a mother service and a variant service, the mother service being a default service to which a receiver should tune, the variant service being a service selected at a receiver side and linked to the mother service by a service link defining a switching relation between the mother service and the variant service, and wherein a first data-stream represents a content of the mother service and a second data-stream represents a content of the variant service, the method including:
- including data representing switching information into the first data-stream,
- receiving the first data-stream,
- reading the data representing switching information, and
- switching from the mother service to the variant service according to the data representing switching information.

Such method has the advantage of allowing a receiver to switch from the mother service to a variant service, and it can be implemented without the need for introducing many additional parameters exceeding the present standards. When tuned to receive the data-stream representing audio and video content of the mother service, the data representing switching information is also automatically received, and the receiver can initiate switching from the mother service to the variant service, or to a specific one of a plurality of variant services. The switching information can be included into existing parts already defined in the data-stream of a Digital TV signal, and thus the method utilizes already existing mechanisms. In this way the method ensures backward compatibility with existing receivers. Further, it is a simple task to modify existing receivers to switch according to the method. The result is higher likeliness for a uniform implementation in the market, in the sense that all the descriptor's options can be implemented in receivers. This will guarantee a much more reliable implementation for broadcasters. Furthermore, the method offers a high tuning speed due to the mother service being the default service for a receiver to tune to.

The mother service and the (one or more) variant service(s) may be content wise equivalent but differ in qualities, e.g. HD versus SD TV. Alternatively, the mother service and the (one or more) variant service(s) may be content wise different, e.g. variant service(s) being different versions of local news, but offering the same quality.

The invention offers solutions to the following issues:
1) Defining an efficient switching concept for services/channels that are available in different versions, by allowing the services to rely on a common mother service for all common transmissions and only switching to the actual channel selected when signaling is available. This mechanism is more reliable and simple than a mechanism that defines a "per-event" switch from the actual channel to the mother channel, and as a consequence the above mechanism allows the switching data for the various services to be carried only once for all common events. Only if/when there is an event specific to one of the variant service, the EPG data for that variant service need to carry it.
2) A new method for handling differences in Conditional Access status between the mother service and the variant service in which an automatic service/channel switch is defined, which elegantly handles the automatic selection of the mother service and the variant service in case two (content wise equivalent, but quality wise different: e.g. SD and HD) equivalent versions of a event are available. Currently no such mechanism is defined.
3) A new method for synchronization between the mother service and the variant service, preferably using event ids is defined that avoids switching back-and-forth problems resulting from inaccurate synchronization of the signaling on two services that switch between each other.
4) A new method to revert from switching to a "higher quality" transmission in case that transmission turns out to have poor reception quality.

In the following examples of embodiments will be described.

The data representing switching information may be included into a service definition section part of the first data-stream, preferably in an Electronic Program Guide data part of the first data-stream. Especially, the data representing switching information may include a non-empty event in an Electronic Program Guide of the variant service included in the first data-stream. The Electronic Program Guide of the variant service may be included in both of the first and second data-streams, so as to allow a receiver to switch back from the variant service to the mother service indicated by an event indicated in the Electronic Program Guide of the second data-stream. The data representing switching information may be included in the Electronic Program Guide part in the form of a relation to an event indicated in an Event Information Table. The relation to an event indicated in the Event Information Table is one of: an end of an event, and a start of an event. In these cases, existing data structures of the data-streams are utilized for the switching between mother service and variant service. Since the receiver is by default tuned to the mother service, there is no need to transmit all EPG/EIT data for the variant service(s) in both the variant service(s) and mother service.

The first and second data-streams may be represented at different carrier frequencies. In such case, the data representing switching information may include data identifying the second data-stream through which a receiver can identify the carrier frequency of the second data-stream. Alternatively, a receiver performs a frequency scan so as to locate data-streams in a transmission network by means of which the receiver determines the carrier frequency of the second data-stream.

The data representing switching information may include information allowing a receiver of the mother service to switch to a plurality of different variant services. Preferably, the receiver determines which one of the plurality of different variant services to switch to. The receiver may determine which one of the plurality of different variant services to switch to based on different strategies. Especially, the receiver may determine the variant service to switch to based on capability properties of the receiver such as an SD receiver which will not switch to a HD service, access rights of the event on the mother service, and access rights of the event on the variant services. Such access rights may be stored on a smart card which is read by the receiver, or pre-stored access rights in a memory of the receiver. Further, the receiver may determine a variant service transmitting local news based on a zip code associated with the user, e.g. zip code data stored in the receiver. The content of different variant services may represent temporary different versions of one simultaneously transmitted content. Alternatively or additionally, the variant services may represent different qualities of the same content (e.g. HD and SD video, and/or stereo and surround sound audio).

The method may further include steps of
- including data representing a second switching information into the second data-stream,
- receiving the second data-stream,
- reading the data representing the second switching information, and
- switching from the variant service to the mother service according to the data representing the second switching information. In this way the receiver can switch back to the mother service from a variant service based on data in the data-stream of the variant service.

A receiver may determine a measure of quality of reception of the variant service, and wherein the receiver determines to switch to the mother service in case the quality of reception of the variant service is below a predetermined level. Hereby, the receiver will automatically be able to switch back from a HD service to an SD service, in case the reception quality of the HD service is poor, thus saving the user the task of manually switching. The receiver may provide the user with an option to prevent switching from the mother channel to the variant channel.

Data representing the service link between the mother service and the variant service may be carried as part of a service definition section part of either the variant service or the mother service.

In a second aspect, the invention provides a Digital TV transmitter arranged to transmit a Digital TV signal representing a mother service and a variant service, the mother service being a default service to which a receiver should tune, the variant service being a service selected at a receiver side and linked to the mother service by a service link defining a switching relation between the mother service and the variant service, and wherein a first data-stream represents a content of the mother service and a second data-stream represents a content of the variant service, and wherein the transmitter is arranged to include data representing switching information into the first data-stream so as to allow a receiver to switch from the mother service to the variant service accordingly.

In a third aspect, the invention provides a Digital TV receiver arranged to receive a Digital TV signal representing a mother service and a variant service, the mother service being a default service to which the receiver should tune, the variant service being a service selected by the receiver and linked to the mother service by a service link defining a switching relation between the mother service and the variant service, and wherein a first data-stream represents a content of the mother service and a second data-stream represents a content of the variant service, wherein the receiver is arranged to
- read data representing switching information included in the first data-stream, and
- to switch from the mother service to the variant service according to the data representing the switching information.

In a fourth aspect, the invention provides a Digital TV transmission system including
- a Digital TV transmitter arranged to transmit a Digital TV signal representing a mother service and a variant service according to the second aspect, and
- a Digital TV receiver arranged to receive the Digital TV signal and to switch between the mother service and the variant service according to the third aspect.

In a fifth aspect, the invention provides a Digital TV signal representing a mother service and a variant service, the mother service being a default service to which a receiver should tune, the variant service being a service selected at a receiver side and linked to the mother service by a service link defining a switching relation between the mother service and the variant service, and wherein a first data-stream represents a content of the mother service and a second data-stream represents a content of the variant service, and wherein the first data-stream includes data representing switching information allowing a receiver to switch to the variant service accordingly.

In a sixth aspect, the invention provides a computer executable program code arranged to perform the method according to the first aspect. Such program code can be designed for execution on a dedicated processor or be designed for execution on a general purpose processor, e.g. a processor in a PC. The computer executable program code may be carrier on a data carrier, such as: a hard disk, a CD, a DVD, a memory card, a memory stick etc.

It is appreciated that the same advantages and equivalent embodiments mentioned for the first aspect apply as well for the second, third, fourth, fifth and sixth aspects.

The aspects of the present invention described above may each be combined with any of the other aspects or with sub aspects/embodiments thereof. These and other aspects of the invention will be apparent from and elucidated with reference to the embodiments described hereinafter.

### BRIEF DESCRIPTION OF THE DRAWINGS

Embodiments of the invention will be described, by way of example only, with reference to the drawings, in which
Fig. 1 illustrates a block diagram of a Digital TV system embodiment according to the invention,
Fig. 2 illustrates data-streams of a mother service and a variant service each carrying data representing switching information,
Fig. 3 illustrates an example of the use of Event Information Tables to provide switching information allowing a receiver to switch between a mother service and variant services, and
Figs. 4-6 illustrate respective examples of switching between a mother service and different variant services and thus obtain different behaviors of receivers with different preset access rights.

### DESCRIPTION OF EMBODIMENTS

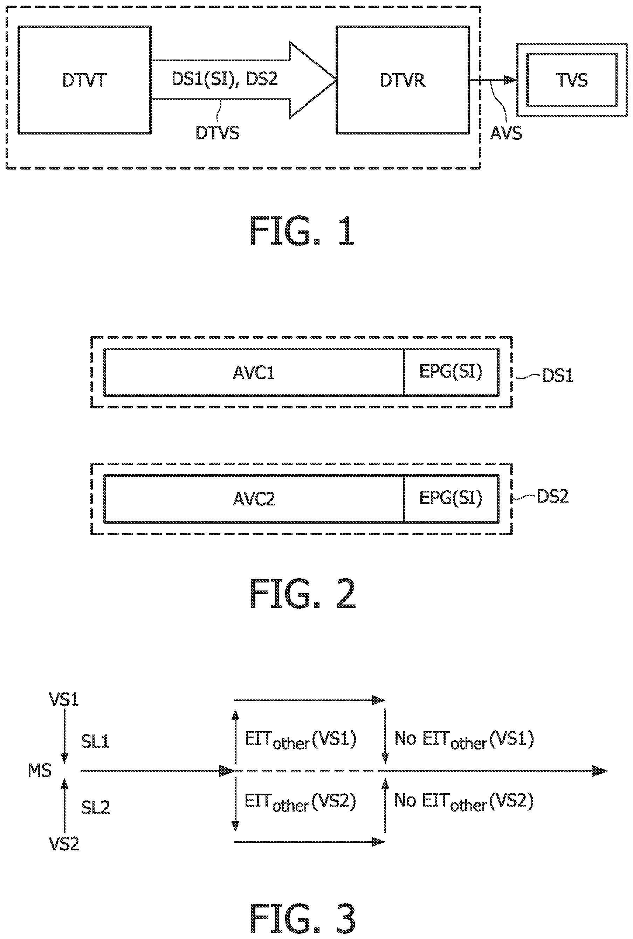

Fig. 1 shows a Digital TV system embodiment according to the invention. A Digital TV transmitter DTVT transmits a Digital TV signal DTVS, and this signal DTVS is receiver by a Digital TV receiver DTVR. The receiver outputs in response to the Digital TV signal an appropriate audio-video output signal AVS. This to output signal AVS can then be applied to a TV set TVS or separate audio and video devices.

As illustrated, the Digital TV signal DTVS includes two data-streams, namely a first data-stream DS1 including a representation of a content of a mother service to which the receiver DTVR should tune to by default. A second data-stream DS2 is also included in the signal DTVS, and this second data-stream DS2 includes a representation of a content of a variant service. The brackets indicate that data representing switching information SI is included in the data-stream DS1 of the mother service. Upon reading this switching information SI, the receiver is allowed to switch to the variant service, i.e. to tune to the second data-stream DS2 and thus receive and decode the content of the variant service. The switching information SI is preferably includes in Electronic Program Guide data of the mother-service data-stream DS1, e.g. in the form of an Event Information Table linking the switching from the mother service to the variant service to an end or start of an event. In this way existing data structures can be utilized to create variants of a number of different services, namely one mother service and a plurality of variant services, the specific choice of the variants being determined at the receiver side, e.g. by access rights purchase by a user etc.

The receiver preferably performs a check before switching according to the switching information, such as checking a smart card inserted into the receiver DTVR indicating access rights paid for. In addition, the capability of the receiver, e.g. SD/HD decoding capabilities are also checked, so as to avoid an SD receiver without HD decoding capabilities switching to a HD quality service.

The two data-streams DS1, DS2 may be represented at the same or at different carrier frequencies. In this case, the switching information SI may include data indirectly indicating to the receiver DTVR the carrier frequency at which the variant service data-stream DS2 is represented.

A new way to handle (not only HD) services with regional (or other types of versions) opt outs is presented. In a sense it is the inverse of the existing simulcast type linkage_descriptor, in that the mother service is not the "original service" but the mother service is the "target service". Its EIT carriage efficiency for services with a large degree of sharing is much higher, and it offers advantages in tuning speed.

The basic idea behind the inventive method for creating variants of a mother service is to "ask the user" to switch or not between events based on signaling by the broadcaster. Though the reception quality of the HD feed may require some form of user intervention to prevent undesirable switching for a channel, making such a decision on an event basis will create substantial user aggravation. Such an issue is best handled at "preference setting" level or at installation time.

Making this prompt for other purposes (i.e. the "simulcast event" would not be true simulcast) is not a valid application. I.e. there is a need for handling poor reception conditions, and to solve this it is preferred to omit a user prompt (+ message) and link-following decision completely and to rely on local receiver settings for managing the decision to follow a link depending on reception quality. Compared to existing solutions, the side effect will be that all of the complexities of dealing with text strings and languages disappear.

Fig. 2 illustrates switching information SI cross-carried in EPG data included in the first DS1 and second DS2 data-streams representing a mother service and a variant service, respectively. The respective audio-video contents of the two services are denoted AVC1 and AVC2. For common events, EPG data is only required in the mother service data-stream DS1. However, for an event specific to one variant service, EPG data for that variant service is required both in the variant service itself and in the mother service as well.

Fig. 3 illustrates links between a mother service MS and two variant services VS1, VS2. The variant services VS1, VS2 are linked to the mother service MS by service link data SL1, SL2 defining a switching relation to the mother service. Such service link data SL1, SL2 is preferably carried in a service definition section part of either the mother service MS or the variant service VS1, VS2.

As illustrated, Event Information Table data EIT(VS1), EIT(VS2) carried in by the mother service indicate an event at which the receiver can choose to switch from the mother service MS to one of the variant services VS1, VS2, e.g. local news variants, whereas the mother service MS has no content during this period (indicated by dashed line). After expiration of the event of the variant services VS1, VS2, switching back to the mother service MS does not require EIT information, indicates as "No EIT(VS1)" and "No EIT(VS2)", since the EIT(VS1), EIT(VS2) data causing the switch to one of the variant services VS1, VS2, can be used to indicate to the receiver to simply switch back in response to an empty content of the one of the two variant service VS1, VS2 data-streams to which the receiver is tuned.

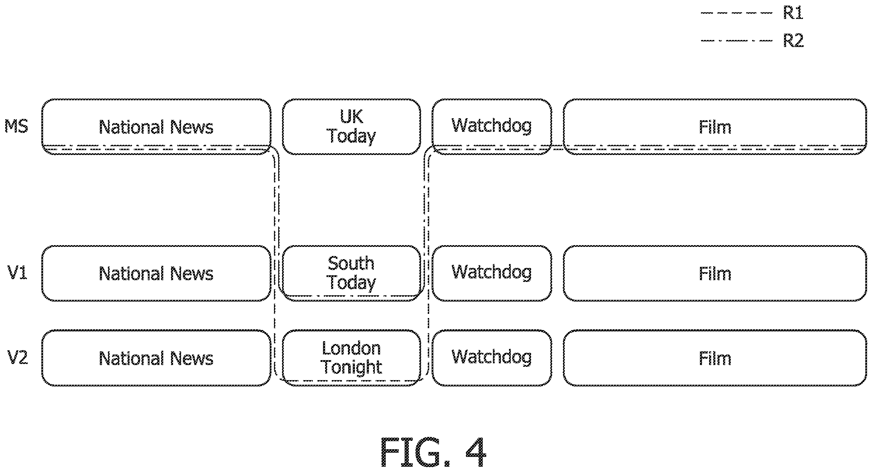

Figs. 4-6 illustrate different examples of the creation of different variants R1-R4 of a mother service MS, indicated as different routes (shown with different line types), by switching between different events on a mother service MS and two variant services VS1, VS2.

Fig. 4 illustrates two variants R1, R2 in which the mother service MS transmits national news followed by switching to one of the two variant services VS1, VS2, transmitting different local news versions. After the local news event, both variants R1, R2, switch back to the mother service MS transmitting common events for both variants R1, R2. Especially, the mother service MS may be in HD quality, while the variant services VS1, VS2 are SD quality. The scenario of Fig. 4 can be handled by putting a linkage descriptor in every event on the regional service except for the regional events. The receiver tunes to a regional service to select his regional preference (the HD service could be totally hidden).

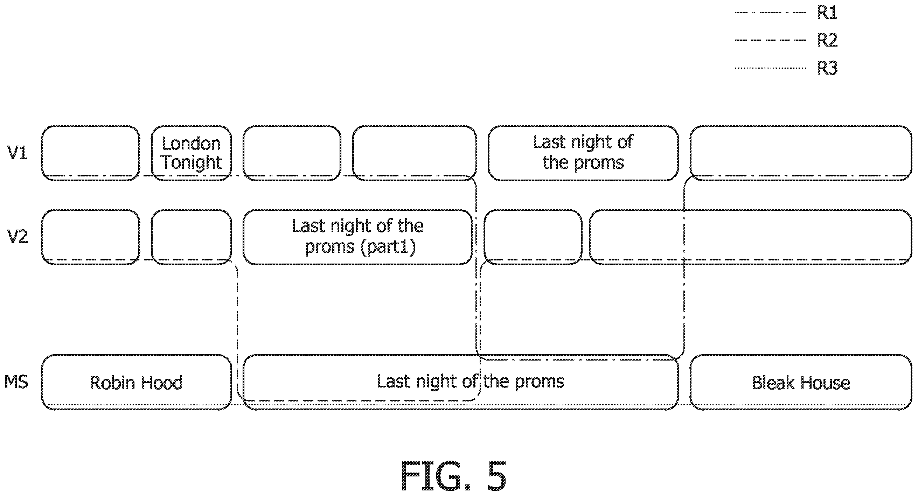

Fig. 5 illustrate an example of split-events, namely three variants R1, R2, R3 based on different access rights to different events on the mother service MS and the two variant service VS1, VS2. The mother service MS may be in HD quality, while the two variant services VS1, VS2 are in SD quality. Thus, different parts of the event "Late night of the proms" are simultaneously transmitted in both HD quality and SD quality.

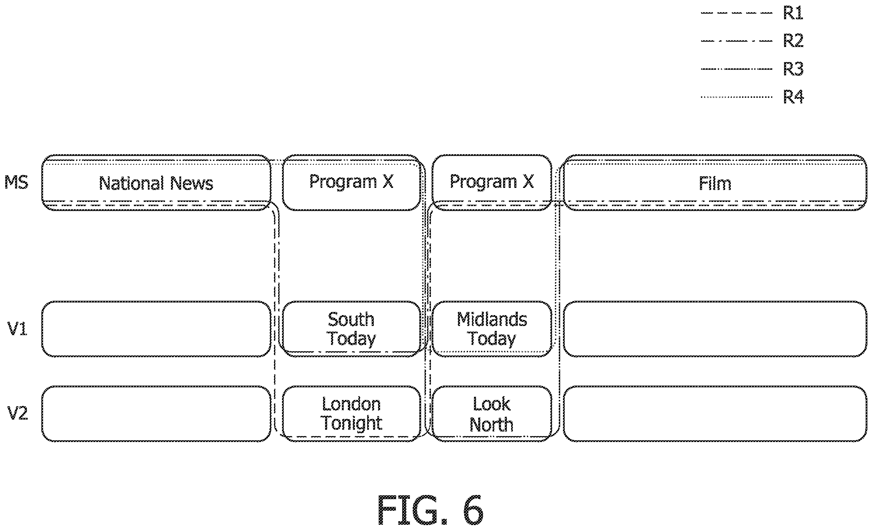

Fig. 6 illustrate another example of split-events, namely four local variants R1, R2, R3, R4 based on different temporal switching behavior between contents transmitted on the mother service MS and the two variant services VS1, VS2. In a sense this scenario is very similar to the previous HD with regional opt-out scenario illustrated in Fig. 5. Four service/channels would be needed for four regions, and each would have a separate SDT entry. The same considerations as for the other HD with regional opt-out scenario hold. It is to be noted that in all of the HD with SD opt-out scenarios a disadvantage exists in that the EIT tables multiply with the number of regions for what are essentially almost identical services/channels with an occasional difference. This situation of HD services/channels with a regional opt out may require more attention than may appear now, but today's receivers may still work in 10 years.

In the following, more implementation specific details are described.

Event_info_source: In case of events, when a channel/service simulcasts the event information to be displayed to the end user should be based on the EIT of the "original service/channel", i.e. the mother service, since the mother service is in control of the sequence of events that defines the service itself. I.e. if a schedule change is done, the mother service may modify the EIT to reflect that. Only on component descriptors the information from the variant service should be used. There seems little need to use the information in the target EIT for user viewing. The only issue may be the transmission of EITother_pf information for this purpose in the target EIT. As an even more simple embodiment, only the EITpf of the variant service (mux) is used. This will not allow certain "partial switch" scenarios, where the service may select to simulcast only a part of the HD event on the HD channel. It is for consideration however how common such partial switch scenario's are. Overall this is the most simple proposal. The advantage of this proposal is that all EIT info (including component descriptors) can be found in one EIT, and the EIT of the mother service and the variant service are equal.

Return Table: In existing DTV systems, the return table mechanism specifies two mechanisms: one based on the EITpf of the mother service and one synchronizing to the end of an event on the variant service. One embodiment is linked to the above-defined EIT embodiment: namely, to rely on the EITpf of the variant service and synchronize to the end of the event on the variant service. A disadvantage by this solution is that on a sequence of two simulcast events the receiver may switch back to the mother service and forth to the variant service. In another embodiment, linked to the other above-defined EIT embodiment, the solution is to rely on continuous monitoring of the EITother_pf of the mother service. This has the additional advantage that the mother service remains fully under the control of the operator: the operator will keep having full real-time control on the time of switching, e.g. such control can be used by the operator to interrupt a simulcast event for an important news flash or some other change of schedule at all times.

Target_listed: Having services in a multiplex not listed in the SDT is seemingly at odds with the general rules of DVB. In countries that use the LCN mechanism this service can be hidden from the user service list. However, in some countries where the LCN mechanism is not used, "delisting" a service is not an option. In one embodiment, a service with an unappealing name is introduced as the carrier for the HD simulcast feed, e.g. a service with the name "Temporary auxiliary feed channel". It may appear in receiver service listings but it will not act as a disturbing factor, e.g. in case the EIT of the mother service is used, it may not even have an EIT of its own, or simply not list events in the EIT, and its status may be "not running" in case no event is on air.

In the following different issues related to aspects of service rendering that may be affected by the linkage mechanism.

Monitoring of SDT running status: The running status of the mother SDT is a controlling factor in the decision to render a service. When switched to the variant service it may be more difficult to monitor this. It is uncertain if today's receivers monitor the SDT running status continuously. However, this is not considered an important issue.

CA issues: An ambiguous situation regarding a switching decision would occur if the variant service of the switch would have a different CA status than the mother service (in particular if it had a "more expensive" status). Having a message to allow the user to switch may seem like a solution to this problem but it keeps adding aggravation to the end-user. In one embodiment, the receiver inquires with the CA system if the variant service can be (conditionally) decrypted. If so, the receiver would switch to the variant service and render it. In case a pin-code would have to be entered (e.g. for additional payment authorization), the receiver could stall and wait for the dialogue to finish (detecting this status with Common Interface may be tricky). In a preferred embodiment, this situation is fully handled in the receiver implementation. Preferably, the receiver always switches to the variant service regardless of the CA status, but that when a "no-decode" situation is detected, the receiver will switch back (presumably it can decode the original event). Receivers may enhance on this behavior in case this situation occurs often in the market (i.e. by pre-detecting the encryption status of the target event).

Parental Rating: It may be a reasonable assumption for the variant service event to have the same parental rating as the simulcast mother service. I.e. the choice of EIT (as per EIT_info_source) can be used.

Target Reception Quality: In case the variant service has a poor reception quality switching to it may lead to user complaints. It is to be noted that the reception of a mux and its tables may be possible at substantial poorer BERs than those that are necessary for any reasonable video rendering to be able to happen. Two ways to control the switching can be selected: 1) the user "delists" the variant service in the service list (or by using some other pre-set control), the user can thus permanently disable switching to such a poor service, or 2) when switching, the receiver can dynamically auto-detect a poor level of reception quality and decide to auto switch back. Tuning the algorithm to make this auto-switch is very tricky however. I.e. it is probably necessary to offer a "switch-back-to-SD" user option in the user menu.

Event synchronization: It is a difficult networking problem to accurately synchronize EIT signaling to the content, and even more so, to accurately synchronize EIT information between different service/channels. Therefore the mechanism that uses return_table = "at end of next event". This can be solved by specifying the end event specifically: i.e. change the descriptor into:

| | |
|---|---|
| return_table | 1 bslbf |
| ... | |
| ... | |
| switchback_event_id | 16 uimsbf |

return_table: When this bit is '1' the receiver shall return to the mother service when the event_id on the variant service matches to switchback_event_id (i.e. on the event transmission in the EIT of the variant service). Further implementation details in this regard are preferred to follow the definitions of GBS0600.
switchback_event_id: This is the event_id of the event on the variant service that when active requires switchback to the mother service of the link. Its value is valid only when return_table = 1 (i.e. synchronize switchback on event transition). It is proposed to add the switchback_event_id into the simulcast descriptor.

Further considerations of HD service/channel with regional opt-out: Three solutions could be foreseen to handle some of the disadvantages associated with the handling of HD channels with regional opt-outs: 1) Use a way to carry the EITother more efficiently, e.g. by introducing a link from the regional service to generically refer to the EIT of the HD service for almost all events except the ones listed in the EIT of the regional service explicitly. 2) Create the notion of a regionality branch, or a more generic "service_version" of it, using a new linkage descriptor. This obviously introduces a new concept of "service versions" with a preference at the user interface level. Its main disadvantages are that a new service navigation concept has to be introduced and that the EIT structures change in a rather incompatible way and thus require attention. 3) Create the notion of a "semi-permanent" replacement of a (regional) service by a mother service with the "occasional" branch-back; i.e. somehow reverse the linking mechanism without introducing a new "service version" concept.

Referring to 1) described above, a preferred solution for Initial Proposal EIT_version linkage is:

```
             if (linkage_type == 0x0E) {
               for (i=0; i<N; i++) {
                 private_data_byte 8 bslbf }
```

Essentially the link specific field can be empty. Carriage could in the EIT_other, with due consideration be given to its carriage structure (it may be useful to carry it in all sub-parts of the table at least once). Alternatively it may be carried in the SDT. The semantics state that unless an event is explicitly carried in this service's EIT, the events are identical to that of the service referred to.

Referring to 2) described above, a preferred solution for Initial Proposal service version_link is:

```
             if (linkage_type == 0x0E) {
               service_version8 uimsbf
               for (i=0; i<N; i++) {
                 private_data_byte 8 bslbf } }
```

This descriptor is carried in the SDT to indicate the versions of a service that are presented to the user, and in the EIT, to indicate when the main service has an opt-out for a specific version of it. For each version of a service another descriptor is needed.

The field service version indicates the version of the service. The user may select his favorite version of a service in the user interface of the receiver. The name of the service is carried in the SDT of the target of the link. Note: switching semantics regarding EIT should be to list the target EIT and the target SDT in the UI.

Referring to 3) described above, a preferred solution for Generic mother_service link is described here. This option is almost identical to that described in 1): the link is carried in the mother service's SDT and marks to "semi-continuous" replacement of this service by a "mother" service. There are some options to arrange "switching back" to the mother service: a) On a specific link like in 2), but using a service triplet rather than service_version as "qualification" for the link (to mark the different links for different versions of the mother service), b) Alternatively, it can be handled through the original service's EIT as per 1), by defining carriage of the linkage descriptor in the EITpf of the original service.

The latter proposal is the simplest and is assumed here. The resulting preferred "mother_service_linkage type" linkage descriptor is:

```
             if (linkage_type == 0x0E) {
               for (i=0; i<N; i++) {
                 private_data_byte 8 bslbf } }
```

The last option is the preferred one, and it is virtually identical to a regional service carrying a simulcast_type linkage descriptor in each event of the EIT except a few, and it complements proposal 1) for simplifying the simulcast descriptor. An advantage of this solution is that it is also almost completely legacy compatible: a legacy receiver will see all regional channels and the mother service, but simply will not be able to auto-switch. Thus, in essence it is proposed to define a "mother_service" type linkage descriptor that can be carried in SDT and indicates that a service is a version of a "mother service" except for the events listed explicitly in its EIT or the "version" of this service.

To sum up, the invention provides a method for creating variants of a DTV service, a method which is simpler than the method defined in GBS0600, and the method can handle all use-case scenarios for simulcast linking in a way almost equal to that defined in GBS0600. The method introduces switching between a mother service and a variant service, the mother service being a default service to which a receiver should tune, and the variant service being a service selected at a receiver side and linked to the mother service by a service link defining a switching relation between the mother service and the variant service. The method is defined by including switching information into the data-stream of the mother service, receiving the mother service data-stream, reading the switching information, and switching from the mother service to the variant service accordingly. The switching information can be carried in EPG data and thus utilize existing data structures. EPG data of the mother service, e.g. in the form of EIT data, can be used to carry switching data, expect for variant service events different from the mother service, where the EPG/EIT data are preferably cross-carried by the mother and variant service. Preferably, the receiver selects which one of a plurality of possible variant service to switch to, e.g. based on receiver capabilities and/or user access rights. Thus, EIT carriage efficiency for services with a large degree of sharing is high, and it offers advantages in tuning speed. Further, the method will lead to simpler and consistent receiver implementations.

The method will reduce the broadcaster options, but its likelihood of a more consistent implementation is a significant advantage, as well as the enhancement made to improve synchronization between mother and variant services. The new method can handle not only HD services with regional (or other types of versions) opt outs. In a sense it is the inverse of the existing simulcast type linkage_descriptor in that the mother service is no longer the original service but is the target service. The scope of the invention is defined by the claims.

## Claims

1. Method for creating variants (R1, R2, R3, R4) of a mother service (MS) in a Digital TV system by switching between a mother service (MS) and a variant service (VS1, VS2), the mother service (MS) being a default service to which a receiver (DTVR) should tune, the variant service (VS1, VS2) being a service selected at a receiver side and linked to the mother service (MS) by a service link (SL1, SL2) defining a switching relation between the mother service (MS) and the variant service (VS1, VS2), and wherein a first data-stream (DS1) represents a content of the mother service (MS) and a second data-stream (DS2) represents a content of the variant service (VS1 , VS2), the method including:
- including at a transmitter side (DTVT) data representing switching information (SI) into the first data-stream (DS1),
- receiving the first data-stream (DS1),
- reading the data representing switching information (SI), and
- switching from the mother service (MS) to the variant service (VS1, VS2) according to the data representing switching information (SI)
- including at a transmitter side (DTVT) data representing a second switching information into the second data-stream (DS2),
- receiving the second data-stream (DS2),
- reading the data representing the second switching information, and
- switching from the variant service (VS1, VS2) to the mother service (MS) according to the data representing the second switching information.

2. Method according to claim 1, wherein the data representing switching information (SI) is included into a service definition section part of the first data-stream (DS1).

3. Method according to claim 2, wherein the data representing switching information (SI) is included in an Electronic Program Guide (EPG) data part of the first data- stream (DS1).

4. Method according to claim 3, wherein the data representing switching information (SI) includes a non-empty event in an Electronic Program Guide (EPG) of the variant service (VS1, VS2) included in the first data-stream (DS1).

5. Method according to claim 4, wherein the Electronic Program Guide (EPG) of the variant service (VS1, VS2) is included in both of the first and second data-streams (DS1, DS2), so as to allow a receiver (DTVR) to switch back from the variant service (VS1, VS2) to the mother service (MS) indicated by an event indicated in the Electronic Program Guide (EPG) of the second data-stream (DS2).

6. Method according to claim 3, wherein the data representing switching information (SI) is included in the Electronic Program Guide (EPG) part in the form of a relation to an event indicated in an Event Information Table (EIT).

7. Method according to claim 6, wherein the relation to an event indicated in the Event Information Table (EIT) is one of: an end of an event, and a start of an event.

8. Method according to claim 1, wherein a receiver (DTVR) determines a measure of quality of reception of the variant service (VS1, VS2), and wherein the receiver (DTVR) determines to switch to the mother service (MS) in case the quality of reception of the variant service (VS1, VS2) is below a predetermined level.

9. Method according to claim 8, wherein the receiver (DTVR) provides a user with an option to prevent switching from the mother channel (MS) to the variant channel (VS1, VS2).

10. Method according to claim 1, wherein data representing the service link (SL1, SL2) is carried as part of a service definition section part of one of: the variant service (VS1, VS2), and the mother service (MS).

11. A Digital TV transmitter (DTVT) arranged to transmit a Digital TV signal (DTVS) representing a mother service (MS) and a variant service (VS1, VS2), the mother service (MS) being a default service to which a receiver (DTVR) should tune, the variant service (VS1, VS2) being a service selected at a receiver side (DTVR) and linked to the mother service (MS) by a service link (SL1, SL2) defining a switching relation between the mother service (MS) and the variant service (VS1, VS2), and wherein a first data-stream (DS1) represents a content of the mother service (MS) and a second data-stream (DS2) represents a content of the variant service (VS1, VS2), and wherein the transmitter (DTVT) is arranged to include data representing switching information (SI) into the first data-stream (DS1) so as to allow a receiver (DTVR) to switch from the mother service (MS) to the variant service (VS1, VS2) accordingly, and wherein the transmitter (DTVT) is further arranged to include data representing a second switching information into the second data-stream (DS2), so as to allow a receiver (DTVR) to switch from the variant service (VS1, VS2) to the mother service (MS) accordingly.

12. A Digital TV receiver (DTVR) arranged to receive a Digital TV signal (DTVS) representing a mother service (MS) and a variant service (VS1, VS2), the mother service (MS) being a default service to which the receiver (DTVR) should tune, the variant service (VS1, VS2) being a service selected by the receiver (DTVR) and linked to the mother service (MS) by a service link (SL1, SL2) defining a switching relation between the mother service (MS) and the variant service (VS1, VS2), and wherein a first data-stream (DS1) represents a content of the mother service (MS) and a second data-stream (DS2) represents a content of the variant service (VS1, VS2), wherein the receiver (DTVR) is arranged to
- read data representing switching information (SI), which has been included in the first data-stream (DS1) at a transmitter side (DTVT),
- switch from the mother service (MS) to the variant service (VS1, VS2) according to the data representing the switching information (SI),
- read the data representing a second switching information (DS2), which has been included in the second data stream (DS2) at the transmitter side (DTVT), and
- switch from the variant service (VS1, VS2) to the mother service (MS) according to the data representing the second switching information.

13. A Digital TV transmission system including
- a Digital TV transmitter (DTVT) arranged to transmit a Digital TV signal (DTVS) representing a mother service (MS) and a variant service (VS1, VS2) according to claim 11, and
- a Digital TV receiver (DTVR) arranged to receive the Digital TV signal (DTVS) and to switch between the mother service (MS) and the variant service (VS1, VS2) according to claim 12.

14. A Digital TV signal (DTVS) representing a mother service (MS) and a variant service (VS1, VS2), the mother service (MS) being a default service to which a receiver (DTVR) should tune, the variant service (VS1, VS2) being a service selected at a receiver side and linked to the mother service (MS) by a service link (SL1, SL2) defining a switching relation between the mother service (MS) and the variant service (VS1, VS2), and wherein a first data-stream (DS1) represents a content of the mother service (MS) and a second data-stream (DS2) represents a content of the variant service (VS1 , VS2), and wherein the first data-stream (DS1) includes data representing switching information (SI), which has been included in the first data-stream (DS1) at a transmitter side (DTVT), allowing a receiver (DTVR) to switch to the variant service (VS1, VS2) accordingly, and wherein the second data-stream includes data representing a second switching information, which has been included in the second data stream (DS2) at the transmitter side (DTVT), allowing a receiver to switch from the variant service (VS1, VS2) to the mother service (MS) according to the data representing the second switching information.

15. A computer executable program code when executed in a Digital TV transmission system as defined in claim 13, arranged to perform the method according to claim 1.

## Patentansprüche

1. Verfahren zum Anlegen von Varianten (R1, R2, R3, R4) eines Mutterdienstes (*mother service* - MS) in einem digitalen Fernsehsystem durch Wechseln zwischen einem Mutterdienst (MS) und einem Variantendienst (VS1, VS2), wobei der Mutterdienst (MS) ein Standarddienst ist, auf den ein Empfänger (DTVR) eingestellt werden sollte, wobei der Variantendienst (VS1, VS2) ein Dienst ist, der an einer Empfängerseite ausgewählt ist und durch eine Dienstverbindung (SL1, SL2), die eine Wechselbeziehung zwischen dem Mutterdienst (MS) und dem Variantendienst (VS1, VS2) definiert, mit dem Mutterdienst (MS) verbunden ist, und wobei ein erster Datenstrom (DS1) einen Inhalt des Mutterdienstes (MS) darstellt und ein zweiter Datenstrom (DS2) einen Inhalt des Variantendienstes (VS1, VS2) darstellt, wobei das Verfahren Folgendes enthält:
- Enthalten von Daten an einer Senderseite (DTVT), die Wechselinformationen (*switching information* - SI) in dem ersten Datenstrom (DS1) darstellen,
- Empfangen des ersten Datenstroms (DS1),
- Lesen der Daten, die Wechselinformationen (SI) darstellen, und
- Wechseln von dem Mutterdienst (MS) zu dem Variantendienst (VS1, VS2) gemäß den Daten, die Wechselinformationen (SI) darstellen
- Beinhalten von Daten an einer Senderseite (DTVT), die zweite Wechselinformationen in dem zweiten Datenstrom (DS2) darstellen,
- Empfangen des zweiten Datenstroms (DS2),
- Lesen der Daten, die die zweiten Wechselinformationen darstellen, und
- Wechseln von dem Variantendienst (VS1, VS2) zu dem Mutterdienst (MS) gemäß den Daten, die die zweiten Wechselinformationen darstellen.

2. Verfahren nach Anspruch 1, wobei die Daten, die Wechselinformationen (SI) darstellen, in einem Dienstdefinitionsbereichsteil des ersten Datenstroms (DS1) enthalten sind.

3. Verfahren nach Anspruch 2, wobei die Daten, die Wechselinformationen (SI) darstellen, in einem elektronischen Programmzeitschrift (electronic *program guide* - EPG)-Datenteil des ersten Datenstroms (DS1) enthalten sind.

4. Verfahren nach Anspruch 3, wobei die Daten, die Wechselinformationen (SI) darstellen, ein nicht-leeres Ereignis in einer elektronischen Programmzeitschrift (EPG) des Variantendiensts (VS1, VS2), der in dem ersten Datenstrom (DS1) enthalten ist, enthalten.

5. Verfahren nach Anspruch 4, wobei die elektronische Programmzeitschrift (EPG) des Variantendienstes (VS1, VS2) sowohl in dem ersten als auch in dem zweiten Datenstrom (DS1, DS2) enthalten ist, um zu ermöglichen, dass ein Empfänger (DTVR) von dem Variantendienst (VS1, VS2) zu dem Mutterdienst (MS) zurück wechselt, angezeigt durch ein Ereignis, das in der elektronischen Programmzeitschrift (EPG) des zweiten Datenstroms (DS2) angezeigt wird.

6. Verfahren nach Anspruch 3, wobei die Daten, die Wechselinformationen (SI) darstellen, in dem elektronischen Programmzeitschrift(EPG)-Teil in Form einer Beziehung zu einem Ereignis, das in einer Ereignisinformationstabelle (*event information table* - EIT) angezeigt wird, enthalten sind.

7. Verfahren nach Anspruch 6, wobei die Beziehung zu einem Ereignis, das in der Ereignisinformationstabelle (EIT) angezeigt wird, eines der Folgenden ist: ein Ende eines Ereignisses und ein Beginn eines Ereignisses.

8. Verfahren nach Anspruch 1, wobei ein Empfänger (DTVR) ein Maß an Empfangsqualität des Variantendienstes (VS1, VS2) bestimmt und wobei der Empfänger (DTVR) bestimmt, zu dem Mutterdienst (MS) zu wechseln, falls die Empfangsqualität des Variantendienstes (VS1, VS2) unter einem vorgegebenen Niveau liegt.

9. Verfahren nach Anspruch 8, wobei der Empfänger (DTVR) einem Benutzer eine Option bereitstellt, um Wechseln von dem Mutterkanal (MS) zu dem Variantenkanal (VS1, VS2) zu verhindern.

10. Verfahren nach Anspruch 1, wobei Daten, die die Dienstverbindung (SL1, SL2) darstellen, als Teil eines Dienstdefinitionsbereichsteils eines der Folgenden getragen wird: des Variantendienstes (VS1, VS2) und des Mutterdienstes (MS).

11. Digitaler Fernsehsender (DTVT), angeordnet, um ein digitales Fernsehsignal (DTVS) zu übertragen, das einen Mutterdienst (MS) und einen Variantendienst (VS1, VS2) darstellt, wobei der Mutterdienst (MS) ein Standarddienst ist, auf den ein Empfänger (DTVR) eingestellt werden sollte, wobei der Variantendienst (VS1, VS2) ein Dienst ist, der an einer Empfängerseite (DTVR) ausgewählt ist und über eine Dienstverbindung (SL1, SL2), die eine Wechselbeziehung zwischen dem Mutterdienst (MS) und dem Variantendienst (VS1, VS2) definiert, mit dem Mutterdienst verbunden ist, und wobei ein erster Datenstrom (DS1) einen Inhalt des Mutterdienstes (MS) darstellt und ein zweiter Datenstrom (DS2) einen Inhalt des Variantendienstes (VS1, VS2) darstellt und wobei der Sender (DTVT) angeordnet ist, Daten, die Wechselinformationen (SI) darstellen, in dem ersten Datenstrom (DS1) zu enthalten, um zu ermöglichen, dass ein Empfänger (DTVR) entsprechend von dem Mutterdienst (MS) zu dem Variantendienst (VS1, VS2) wechselt, und wobei der Sender (DTVT) ferner angeordnet ist, Daten, die zweite Wechselinformationen darstellen, in dem zweiten Datenstrom (DS2) zu enthalten, um zu ermöglichen, dass ein Empfänger (DTVR) entsprechend von dem Variantendienst (VS1, VS2) zu dem Mutterdienst (MS) wechselt.

12. Digitaler Fernsehempfänger (DTVR), angeordnet, um ein digitales Fernsehsignal (DTVS), das einen Mutterdienst (MS) und einen Variantendienst (VS1, VS2) darstellt, zu empfangen, wobei der Mutterdienst (MS) ein Standarddienst ist, auf den sich ein Empfänger (DTVR) einstellen sollte, wobei der Variantendienst (VS1, VS2) ein Dienst ist, der durch den Empfänger (DTVR) ausgewählt ist und über eine Dienstverbindung (SL1, SL2), die eine Wechselbeziehung zwischen dem Mutterdienst (MS) und dem Variantendienst (VS1, VS2) definiert, mit dem Mutterdienst verbunden ist, und wobei ein erster Datenstrom (DS1) einen Inhalt des Mutterdienstes (MS) darstellt und ein zweiter Datenstrom (DS2) einen Inhalt des Variantendienstes (VS1, VS2) darstellt, wobei der Empfänger (DTVR) für Folgendes angeordnet ist:
- Lesen von Daten, die Wechselinformationen (SI) darstellen, die in dem ersten Datenstrom (DS1) an einer Senderseite (DTVT) aufgenommen wurden,
- Wechseln von dem Mutterdienst (MS) zu dem Variantendienst (VS1, VS2) gemäß den Daten, die die Wechselinformationen (SI) darstellen,
- Lesen der Daten, die zweite Wechselinformationen (DS2) darstellen, die in dem zweiten Datenstrom (DS2) an einer Senderseite (DTVT) aufgenommen wurden, und
- Wechseln von dem Variantendienst (VS1, VS2) zu dem Mutterdienst (MS) gemäß den Daten, die die zweiten Wechselinformationen darstellen.

13. Digitales Fernsehsendungssystem, Folgendes enthaltend:
- einen digitalen Fernsehsender (DTVT), angeordnet, um ein digitales Fernsehsignal (DTVS) zu übertragen, das einen Mutterdienst (MS) und einen Variantendienst (VS1, VS2) nach Anspruch 11 darstellt, und
- einen digitalen Fernsehempfänger (DTVR), angeordnet, um das digitale Fernsehsignal (DTVS) zu empfangen und zwischen dem Mutterdienst (MS) und dem Variantendienst (VS1, VS2) nach Anspruch 12 zu wechseln.

14. Digitales Fernsehsignal (DTVS), das einen Mutterdienst (MS) und einen Variantendienst (VS1, VS2) darstellt, wobei der Mutterdienst (MS) ein Standarddienst ist, auf den ein Empfänger (DTVR) eingestellt werden sollte, wobei der Variantendienst (VS1, VS2) ein Dienst ist, der an einer Empfängerseite ausgewählt ist und über eine Dienstverbindung (SL1, SL2), die eine Wechselbeziehung zwischen dem Mutterdienst (MS) und dem Variantendienst (VS1, VS2) definiert, mit dem Mutterdienst verbunden ist, und wobei ein erster Datenstrom (DS1) einen Inhalt des Mutterdienstes (MS) darstellt und ein zweiter Datenstrom (DS2) einen Inhalt des Variantendienstes (VS1, VS2) darstellt und wobei der erste Datenstrom (DS1) Daten enthält, die Wechselinformationen (SI) darstellen, die an einer Senderseite (DTVT) in dem ersten Datenstrom (DS1) aufgenommen wurden, die ermöglichen, dass ein Empfänger (DTVR) entsprechend zu dem Variantendienst (VS1, VS2) wechselt, und wobei der zweite Datenstrom Daten enthält, die zweite Wechselinformationen darstellen, die an einer Senderseite (DTVT) in dem zweiten Datenstrom (DS2) aufgenommen wurden, die ermöglichen, dass ein Empfänger von dem Variantendienst (VS1, VS2) zu dem Mutterdienst (MS) gemäß den Daten, die die zweiten Wechselinformationen darstellen, wechselt.

15. Computerausführbarer Programmcode, der, wenn er in einem digitalen Fernsehsendungssystem nach Anspruch 13 ausgeführt wird, angeordnet ist, das Verfahren nach Anspruch 1 auszuführen.

## Revendications

1. Procédé permettant de créer des variants (R1, R2, R3, R4) d'un service mère (MS) dans un système TV numérique en effectuant une commutation entre un service mère (MS) et un service variant (VS1, VS2), le service mère (MS) étant un service par défaut sur lequel un récepteur (DTVR) devrait s'accorder, le service variant (VS1, VS2) étant un service choisi côté récepteur et lié au service mère (MS) par un lien de service (SL1, SL2) définissant une relation de commutation entre le service mère (MS) et le service variant (VS1, VS2), et, un premier flux de données (DS1) représentant le contenu du service mère (MS) et un second flux de données (DS2) représentant le contenu du service variant (VS1, VS2), ce procédé comprenant des étapes consistant à:
- introduire côté émetteur (DTVT) des données représentant une information de commutation (SI) dans le premier flux de données (DS1),
- recevoir le premier flux de données (DS1),
- lire les données représentant l'information de commutation (SI), et
- effectuer une commutation du service mère (MS) vers le service variant (VS1, VS2) conformément aux données représentant l'information de commutation (SI),
- introduire, côté émetteur (DTVT) des données représentant une seconde information de commutation dans le second flux de données (DS2),
- recevoir le second flux de données (DS2),
- lire les données représentant la seconde information de commutation, et
- effectuer une commutation du service variant (VS1, VS2) vers le service mère (MS) conformément aux données représentant la seconde information de commutation.

2. Procédé conforme à la revendication 1, selon lequel les données représentant l'information de commutation (SI) sont contenues dans une partie de section de définition de service du premier flux de données (DS1).

3. Procédé conforme à la revendication 2, selon lequel les données représentant l'information de commutation (SI) sont contenues dans une partie de données d'un guide électronique de programmes (EPG) du premier flux de données (DS1).

4. Procédé conforme à la revendication 3, selon lequel les données représentant l'information de commutation (SI) contiennent un événement non vide dans un guide électronique de programmes (EPG) du service de variant (VS1, VS2) contenu dans le premier flux de données (DS1).

5. Procédé conforme à la revendication 4, selon lequel le guide électronique de programmes (EPG) du service variant (VS1, VS2) est contenu dans le premier flux de données et dans le second flux de données (DS1, DS2) pour permettre à un récepteur (DTVR) d'effectuer une commutation en retour du service variant (VS1, VS2) vers le service mère (MS), indiqué par un événement indiqué dans le guide électronique de programmes (EPG) du second flux de données (DS2).

6. Procédé conforme à la revendication 3, selon lequel les données représentant l'information de commutation (SI) sont contenues dans la partie du guide électronique de programmes (EPG) sous la forme d'une relation à un événement indiqué dans un tableau d'information d'événements (EIT).

7. Procédé conforme à la revendication 6, selon lequel la relation à un événement indiqué dans le tableau d'information d'événements (EIT) est la fin d'un événement et/ou le début d'un événement.

8. Procédé conforme à la revendication 1, selon lequel un récepteur (DTVR) détermine la mesure de la qualité de réception du service variant (VS1, VS2), et décide de commuter vers le service mère (MS) lorsque la qualité de réception du service variant (VS1, VS2) est située au-dessous d'un niveau prédéfini.

9. Procédé conforme à la revendication 8, selon lequel le récepteur (DTVR) fournit à un utilisateur une option pour empêcher une commutation du canal mère (MS) vers le canal variant (VS1, VS2).

10. Procédé conforme à la revendication 1, selon lequel des données représentant le lien de service (SL1, SL2) sont transportées en tant que parties d'une partie de section de définition de service du service variant (VS1, VS2) ou du service mère (MS).

11. Emetteur TV numérique (DTVT) susceptible de transmettre un signal TV numérique (DTVS) représentant un service mère (MS) et un service variant (VS1, VS2), le service mère (MS) étant un service par défaut sur lequel un récepteur (DTVR) devrait s'accorder, le service variant (VS1, VS2) étant un service choisi côté récepteur (DTVR) et lié au service mère (MS) par un lien de service (SL1, SL2) définissant une relation de commutation entre le service mère (MS) et le service variant (VS1, VS2), et un premier flux de données (DS1) représentant le contenu du service mère (MS) et un second flux de données (DS2) représentant le contenu du service variant (VS1, VS2), et l'émetteur (DTVT) étant réalisé pour contenir des données représentant une information de commutation (SI) dans le premier flux de données (DS1) de façon à permettre à un récepteur (DTVR) d'effectuer en conséquence une commutation du service mère (MS) vers le service variant (VS1, VS2), et l'émetteur (DTVT) étant en outre réalisé pour contenir des données représentant une seconde information de commutation dans le flux de données (DS2) de façon à permettre à un récepteur (DTVR) d'effectuer en conséquence une commutation du service variant (VS1, VS2) vers le service mère (MS).

12. Récepteur TV numérique (DTVR) susceptible de recevoir un signal TV numérique (DTVS) représentant un service mère (MS) et un service variant (VS1, VS2), le service mère (MS) étant un service par défaut sur lequel le récepteur (DTVR) devrait s'accorder, le service variant (VS1, VS2) étant un service sélectionné par le récepteur (DTVR) et lié au service mère (MS) par un lien de service (SL1, SL2) définissant une relation de commutation entre le service mère (MS) et le service variant (VS1, VS2), et un premier flux de données (DS1) représentant le contenu du service mère (MS) et un second flux de données (DS2) représentant le contenu du service variant (VS1, VS2), le récepteur (DTVR) étant réalisé pour permettre:
- de lire des données représentant une information de commutation (SI) qui a été introduite dans le premier flux de données (DS1) côté émetteur (DTVT),
- d'effectuer une commutation du service mère (MS) vers le service variant (VS1, VS2) conformément aux données représentant l'information de commutation (SI),
- de lire les données représentant une seconde information de commutation (DS2) qui a été introduite dans le second flux de données (DS2) côté émetteur (DTVT), et
- d'effectuer une commutation du service variant (VS1, VS2) vers le service mère (MS) conformément aux données représentant la seconde information de commutation.

13. Système de transmission TV numérique comprenant:
- un émetteur TV numérique (DTVT) susceptible de transmettre un signal TV numérique (DTVS) représentant un service mère (MS) et un service variant (VS1, VS2) conforme à la revendication 11, et
- un récepteur TV numérique (DTVR) susceptible de recevoir le signal TV numérique (DTVS) et d'effectuer une commutation entre le service mère (MS) et le service variant (VS1, VS2) conformément à la revendication 12.

14. Signal TV numérique (DTVS) représentant un service mère (MS) et un service variant (VS1, VS2), le service mère (MS) étant un service par défaut sur lequel un récepteur (DTVR) devrait s'accorder, le service variant (VS1, VS2) étant un service sélectionné côté récepteur et lié au service mère (MS) par un lien de service (SL1, SL2) définissant une relation de commutation entre le service mère (MS) et le service variant (VS1, VS2), et un premier flux de données (DS1) représentant le contenu du service mère (MS) et un second flux de données (DS2) représentant le contenu du service variant (VS1, VS2), le premier flux de données (DS1) contenant des données représentant une information de commutation (SI) qui a été introduite dans le premier flux de données (DS1) côté émetteur (DTVT), de façon à permettre à un récepteur (DTVR) d'effectuer en conséquence, une commutation vers le service variant (VS1, VS2) et le second flux de données contenant des données représentant une seconde information de commutation qui a été introduit dans le second flux de données (DS2) côté émetteur (DTVT) de façon à permettre à un récepteur d'effectuer une commutation du service variant (VS1, VS2) vers le service mère (MS) conformément aux données représentant la seconde information de commutation.

15. Code-programme exécutable par un ordinateur qui, lorsqu'il est exécuté dans un système de transmission TV numérique conforme à la revendication 13 est susceptible de mettre en oeuvre le procédé conforme à la revendication 1.
